# EUROPEAN PATENT SPECIFICATION

(11) **EP 4 144 555 B1**
(45) Date of publication and mention of the grant of the patent: **02.04.2025**
(21) Application number: 22188681.5
(22) Date of filing: 04.08.2022
(51) Int. Cl.: B60K 6/26, B60K 6/28, B60K 6/46, B60W 10/06, B60W 10/08, B60W 10/26, B60W 10/30, B60W 20/13, B60W 20/50, B60W 30/18, B60L 15/12, B60W 50/02, B60W 50/038, B60W 50/029, B60L 3/00, B60L 3/04, B60L 50/61, B60L 58/15, B60L 58/20, B60L 50/16

(54) **HYBRID VEHICLE POWER GENERATION SYSTEM**
HYBRIDES FAHRZEUGLEISTUNGSERZEUGUNGSSYSTEM
VÉHICULE HYBRIDE, SYSTÈME DE GÉNÉRATION DE PUISSANCE

(30) Priority: 02.09.2021 JP 2021143397
(43) Date of publication of application: 08.03.2023
(73) Proprietor: Suzuki Motor Corporation, Hamamatsu-shi, Shizuoka 432-8611 (JP)
(72) Inventor: MIYATA, Tasuku, Hamamatsu-shi, 432-8611 (JP); ADACHI, Hiroshi, Hamamatsu-shi, 432-8611 (JP)
(74) Representative: Haseltine Lake Kempner LLP

(56) References cited:
- EP-A2- 2 184 212
- JP-A- 2009 234 559
- US-A1- 2009 243 554
- US-B1- 10 286 892
- US-B2- 7 557 583

## Description

### [Technical Field]

This invention relates to a hybrid vehicle power generation system.

### [Background of the Invention]

A hybrid vehicle described in JP 2009-234559 A includes a high-voltage battery having a relatively high voltage (for example, about 500 V) and used for a traveling operation and a low-voltage battery having a relatively low voltage (for example, about 24 V), charging DC power, and used for vehicle-mounted electrical components. The hybrid vehicle described in JP 2009-234559 A protects the battery from the risk of overcharge by controlling an upper-limit engine rotation speed via an engine control device and maintaining a counter electromotive force of a motor at a voltage below the overcharge when a main relay provided between the battery and a motor is welded so that a motor inverter fails and the battery has a risk of overcharge. Further, the hybrid vehicle described in JP 2009-234559 A protects the battery from the risk of overcharge by controlling the upper-limit engine rotation speed via the engine control device, limiting a counter electromotive force of the motor, and maintaining a counter electromotive voltage of the motor at a voltage below the overcharge when the communication of the motor control device is off and the communication of the battery control device is off. US10286892B1 relates to a vehicle including a motor, an inverter, and a motor controller. EP2184212A2 relates to a fast response failure mode control methodology for a hybrid vehicle having an AC electric machine.

### [Prior Art]

### [Patent Literature]

[Patent Literature 1] JP 2009-234559 A

### [Summary of the Invention]

### [Problem to be solved by the Invention]

However, in the technique described in JP 2009-234559 A, since there was no examination on preventing the welding of a contactor (main relay) provided in a high-voltage current path connecting a generator (motor) to the battery, the welding of the contactor could not be prevented. Further, in the technique described in JP 2009-234559 A, since the power generation voltage of the generator was limited by controlling the upper-limit engine rotation speed when communication abnormality occurs in the communication between the generator and the control device, there was a concern that the traveling could not be continued due to lack of generated electric power.

This invention has been made in view of the above-described problems and an object of this invention is to provide a hybrid vehicle power generation system capable of generating electric power enabling a continuous travel by a generator even when communication abnormality with a control device occurs and preventing an occurrence of a welding of a disconnected contactor provided in a high-voltage current path or a voltage surge of the high-voltage current path.

### [Means to solve the problem]

According to aspects of this invention, there is provided a hybrid vehicle power generation system including: a control device; a generator performing communication with the control device, generating high-voltage electric power according to an instruction of the control device in a normal state without communication abnormality, and autonomously generating high-voltage electric power in an abnormal communication state with communication abnormality; a high-voltage current path connected to the generator and receiving the high-voltage electric power generated by the generator; a contactor switched by the control device to a closed state of connecting the high-voltage current path or an open state of disconnecting the high-voltage current path; a low-voltage current path connected to the generator and supplying low-voltage electric power, having a voltage lower than the high-voltage electric power supplied to the high-voltage current path, to the generator; and a relay switched by the control device to a closed state of connecting the low-voltage current path or an open state of disconnecting the low-voltage current path, wherein the generator stops the autonomous generation of electric power when the relay is switched to the open state to disconnect the low-voltage current path during the autonomous generation of electric power, and wherein the control device switches the relay from the closed state to the open state before the contactor is switched from the closed state to the open state when switching the contactor from the closed state to the open state.

### [Effect of the Invention]

In this way, according to this invention, it is possible to provide a hybrid vehicle power generation system capable of generating electric power enabling a continuous travel by a generator even when communication abnormality with a control device occurs and preventing an occurrence of a welding of a disconnected contactor provided in a high-voltage current path or a voltage surge of the high-voltage current path.

### [Brief description of figures]

[Fig. 1] Fig. 1 is a configuration diagram of a vehicle including a hybrid vehicle power generation system according to an embodiment of this invention.
[Fig. 2] Fig. 2 is a diagram illustrating a counter electromotive voltage of a generator of the hybrid vehicle power generation system according to an embodiment of this invention.
[Fig. 3] Fig. 3 is a flowchart showing an operation of the generator of the hybrid vehicle power generation system according to an embodiment of this invention.
[Fig. 4] Fig. 4 is a flowchart showing an operation of a control device of the hybrid vehicle power generation system according to an embodiment of this invention.

### [Embodiment(s) of the Invention]

A hybrid vehicle power generation system according to embodiments of this invention includes: a control device; a generator performing communication with the control device, generating high-voltage electric power according to an instruction of the control device in a normal state without communication abnormality, and autonomously generating high-voltage electric power in an abnormal communication state with communication abnormality; a high-voltage current path connected to the generator and receiving the high-voltage electric power generated by the generator; a contactor switched by the control device to a closed state of connecting the high-voltage current path or an open state of disconnecting the high-voltage current path; a low-voltage current path connected to the generator and supplying low-voltage electric power, having a voltage lower than the high-voltage electric power supplied to the high-voltage current path, to the generator; and a relay switched by the control device to a closed state of connecting the low-voltage current path or an open state of disconnecting the low-voltage current path, wherein the generator stops the autonomous generation of electric power when the relay is switched to the open state to disconnect the low-voltage current path during the autonomous generation of electric power, and wherein the control device switches the relay from the closed state to the open state before the contactor is switched from the closed state to the open state when switching the contactor from the closed state to the open state. Accordingly, the hybrid vehicle power generation system according to embodiments of this invention can generate electric power enabling a continuous travel by the generator even when communication abnormality with the control device occurs and prevent an occurrence of a welding of the disconnected contactor provided in the high-voltage current path or a voltage surge of the high-voltage current path.

### [Embodiments]

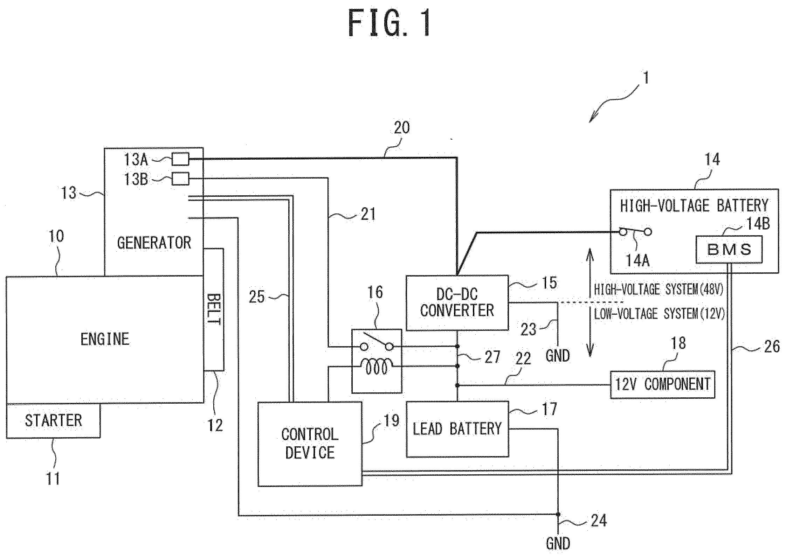

Hereinafter, a hybrid vehicle power generation system according to embodiments of this invention will be described with reference to the drawings. Figs. 1 to 4 are diagrams showing the hybrid vehicle power generation system according to embodiments of this invention.

In Fig. 1, a hybrid vehicle 1 equipped with the hybrid vehicle power generation system according to an embodiment of this invention includes an internal combustion engine 10, a generator 13 which is connected to the engine 10 through a belt 12, a high-voltage current path 20 which is connected to the generator 13 and to which high-voltage electric power generated by the generator 13 is supplied, and a control device 19. The engine 10 includes a starter 11 and the starter 11 starts the engine 10.

The generator 13 is connected to a crankshaft (not shown) of the engine 10 through the belt 12. The generator 13 is an ISG (Integrated Starter Generator) which is a rotary electric machine having a function of generating electric power by the power of the engine 10, a function of applying power to the engine 10, and a function of starting the engine 10. The generator 13 generates 48 V of electric power. The generator 13 is composed of a claw pole type magnet-filled winding field type motor.

The hybrid vehicle 1 includes a high-voltage battery 14 and the high-voltage battery 14 is composed of a Li (lithium ion) battery having a plurality of cells and charges and discharges 48 V of electric power. The high-voltage current path 20 connects the generator 13 to the high-voltage battery 14.

The hybrid vehicle 1 includes a contactor 14A. The contactor 14A is provided in the high-voltage battery 14. The contactor 14A is switched by the control device 19 to a closed state in which the high-voltage current path 20 is connected or an open state in which the high-voltage current path 20 is disconnected. The high-voltage battery 14 is provided with a BMS (Battery Management System) 14B.

The BMS 14B has a function of preventing overcharge, overdischarge, and overcurrent of the cell, a function of managing the temperature of the cell, a function of determining whether or not the cell is abnormal, a function of calculating the state of charge (SOC), and the like. The BMS 14B switches the contactor 14A to the open state or the closed state according to the instruction from the control device 19.

The hybrid vehicle 1 includes low-voltage current paths 21, 22, and 27 to which 12 V of low-voltage electric power is supplied. The low-voltage current path 27 connects a DC-DC converter 15 to a lead battery 17. The low-voltage current path 22 connects the low-voltage current path 27 to a 12V component 18. The low-voltage current path 21 connects the low-voltage current path 27 to the generator 13. Thus, the low-voltage current path 21 supplies low-voltage electric power having a voltage lower than the high-voltage electric power supplied to the high-voltage current path 20 to the generator 13. Specifically, the low-voltage current path 21 supplies low-voltage electric power from the low-voltage system of the hybrid vehicle 1 to the generator 13.

The hybrid vehicle 1 includes the lead battery 17 which charges and discharges 12 V of electric power and the 12V component 18 which is connected to the lead battery 17 via the low-voltage current paths 27 and 22 as a low-voltage system. The 12V component 18 is an electrical component operated by 12V of electric power. The low-voltage current path 21 supplies 12 V of low-voltage electric power to the generator 13.

The hybrid vehicle 1 includes a relay 16. The relay 16 is provided in the low-voltage current path 21. The relay 16 is switched by the control device 19 to a closed state in which the low-voltage current path 21 is connected or an open state in which the low-voltage current path 21 is disconnected.

The hybrid vehicle 1 includes the DC-DC converter 15. The DC-DC converter 15 is connected to the high-voltage current path 20 and the low-voltage current path 27. The DC-DC converter 15 steps down the high-voltage electric power generated by the generator 13 and supplies the stepped down low-voltage electric power to the low-voltage system. Here, the lead battery 17 is charged with the low-voltage electric power output from the DC-DC converter 15. Therefore, the DC-DC converter 15 steps down 48 V of high-voltage electric power supplied from the generator 13 via the high-voltage current path 20 to 14 V of low-voltage electric power and supplies the stepped down low-voltage electric power to the lead battery 17 via the low-voltage current path 27.

The hybrid vehicle 1 includes ground wires 23 and 24. The ground wire 23 connects a minus terminal (not shown) of the lead battery 17 to the DC-DC converter 15. The ground wire 24 connects the minus terminal of the lead battery 17 to the generator 13.

The hybrid vehicle 1 includes a communication line 25 which is used for communication between the control device 19 and the generator 13 by CAN (Controller Area Network) and a communication line 26 which is used for communication between the control device 19 and the high-voltage battery 14 by CAN. The generator 13 communicates with the control device 19 via the communication line 25. The BMS 14B of the high-voltage battery 14 communicates with the control device 19 via the communication line 26.

The control device 19 is configured as an ECU (Electronic Control Unit) which includes a microcomputer equipped with a CPU, a RAM, a ROM, an input/output interface, and the like. The CPU uses the temporary storage function of the RAM and performs signal processing according to a program stored in advance in the ROM. The ROM stores various control constants, various maps and the like in advance.

The generator 13 communicates with the control device 19 and generates high-voltage electric power according to the instruction of the control device 19 in a normal state in which no abnormality occurs in communication.

Here, there is a case in which the hybrid vehicle 1 cannot continue to travel due to the insufficient electricity when the generator 13 is configured to stop the power generation when abnormality occurs in communication between the control device 19 and the generator 13. Here, in this embodiment, the generator 13 autonomously generates high-voltage electric power in the case of communication abnormality in which abnormality occurs in communication with the control device 19 via the communication line 25. That is, the generator 13 autonomously generates electric power according to the control contents set in advance in the generator 13 when abnormality occurs in communication with the control device 19. Accordingly, the hybrid vehicle 1 can continue the power generation by autonomous generation of electric power and can travel to a service base where repairs and the like can be performed.

On the other hand, when the contactor 14A is switched from the closed state to the open state while the high-voltage electric power is supplied to the high-voltage current path 20, the contactor 14A may be welded by arc discharge or a voltage surge (load dump) may occur in the high-voltage current path 20. In order to prevent the welding of the contactor 14A or the voltage surge of the high-voltage current path 20, it is preferable to switch the contactor 14A to the open state while the generation of electric power of the generator 13 is stopped. On the other hand, the control device 19 cannot control the generator 13 to stop the autonomous generation of electric power in the case of communication abnormality with the generator 13.

Here, in this embodiment, the generator 13 stops the autonomous generation of electric power when the relay 16 is switched to the open state during the autonomous generation of electric power so that the low-voltage current path 21 is disconnected. Since the low-voltage current path 21 is disconnected so that the supply of the low-voltage electric power to the generator 13 is stopped and the supply of electric power to the control unit of the generator 13 is stopped, the power supply unit to the field coil inside the generator 13 is turned off and the generator 13 stops the generation of electric power.

The control device 19 switches the relay 16 from the closed state to the open state before the contactor 14A is switched from the closed state to the open state when the contactor 14A is switched from the closed state to the open state in response to the request from the BMS 14B of the high-voltage battery 14. In other words, the control device 19 switches the relay 16 from the closed state to the open state and switches the contactor 14A from the closed state to the open state.

The generator 13 includes a high voltage detection unit 13A which detects an actual power generation voltage value of the high-voltage electric power to be generated. The actual power generation voltage value is a voltage which is actually generated when the generator 13 generates electric power. The generator 13 autonomously generates electric power by setting the actual power generation voltage value detected by the high voltage detection unit 13A before the occurrence of the communication abnormality as a target power generation voltage value during the communication abnormality. Accordingly, since the power generation voltage at the time of the occurrence of the communication abnormality is maintained also in the autonomous generation of electric power, it is possible to extend the traveling life to the service base. The target power generation voltage is a target power generation voltage of the generator 13. Additionally, when electric power is generated above the center (about 60%) of the regular use area of the open circuit voltage (OCV) of the high-voltage battery 14 at the time of the occurrence of the communication abnormality, the generator 13 sets the target power generation voltage to a predetermined value (constant) stored in the generator 13 instead of the actual power generation voltage value at the time of the occurrence of the communication abnormality. Accordingly, even when the communication abnormality occurs during high regeneration of the generator 13, it is possible to prevent the mechanical load from increasing due to the generation of excessive electric power and wasteful consumption of fuel more than the fuel required for extending the traveling life to the service base.

The generator 13 includes a low voltage detection unit 13B which detects the voltage of the low-voltage electric power supplied from the low-voltage current path 21. Here, when the DC-DC converter 15 functions normally, the normal value of the voltage of the low-voltage current path 27 connected to the DC-DC converter 15 becomes equal to or higher than a threshold value at the time of normal electric power generation (in this embodiment, 14 V). On the other hand, when the DC-DC converter 15 does not function normally and the supply of electric power to the low-voltage current path 27 is stopped, the normal value of the voltage of the low-voltage current path 27 becomes a value lower than 14 V. Therefore, the generator 13 stops the autonomous generation of electric power when the voltage value detected by the low voltage detection unit 13B during the communication abnormality is equal to or lower than the threshold value (in this embodiment, 10 V). It is preferable that the control device 19 switches the relay 16 from the closed state to the open state when the communication is abnormal and the cell fails.

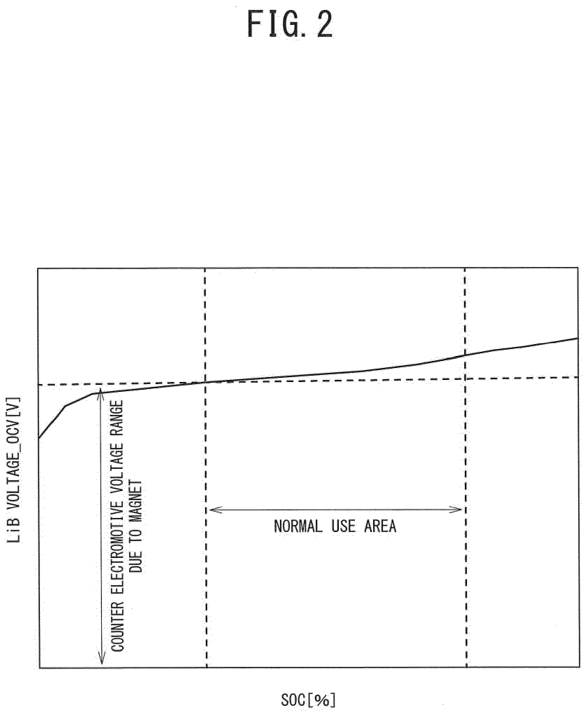

The configuration and power generation characteristics of the generator 13 will be described with reference to Fig. 2. In Fig. 2, the vertical axis indicates the open circuit voltage (OCV) (written as LiB voltage_OCV in the figure) of the high-voltage battery 14 and the horizontal axis indicates the state of charge (in the figure, the state of charge is abbreviated as SOC) of the high-voltage battery 14. In this embodiment, a normally used area of SOC is set in the high-voltage battery 14.

A counter electromotive voltage which is generated by the magnet inside the generator 13 is applied to the high-voltage battery 14. Therefore, the amount of magnet and the magnetic circuit of the generator 13 are set so that the counter electromotive voltage due to the magnet when the engine 10 rotates at the maximum engine rotation speed (the generator 13 rotates at the maximum rotation speed) becomes the lower limit of the open circuit voltage in the normal use area of the high-voltage battery 14. A counter electromotive voltage range exists in the counter electromotive voltage due to the magnet of the generator 13. The upper limit value of the counter electromotive voltage range is set to be the lower limit of the open circuit voltage of the normal use area of the high-voltage battery 14.

In Fig. 1, when the cell of the high-voltage battery 14 fails and the communication abnormality with the generator 13 occurs, the control device 19 switches the relay 16 to the open state so that stops the supply of the low-voltage electric power to the generator 13 by the low-voltage current path 21. Since the supply of the low-voltage electric power is stopped, the power supply unit to the field coil of the generator 13 is turned off so that the generator 13 stops the generation of electric power. Further, even when a counter electromotive voltage is generated due to the rotation of the engine 10, no current flows to the high-voltage battery 14 in which the cell fails since that voltage is set to be equal to or lower than the voltage value of the normal specification area of the high-voltage battery 14. Thus, since no current is supplied to the cell of the high-voltage battery 14 when the cell of the high-voltage battery 14 fails and the communication abnormality with the generator 13 occurs, it is possible to protect the high-voltage battery 14.

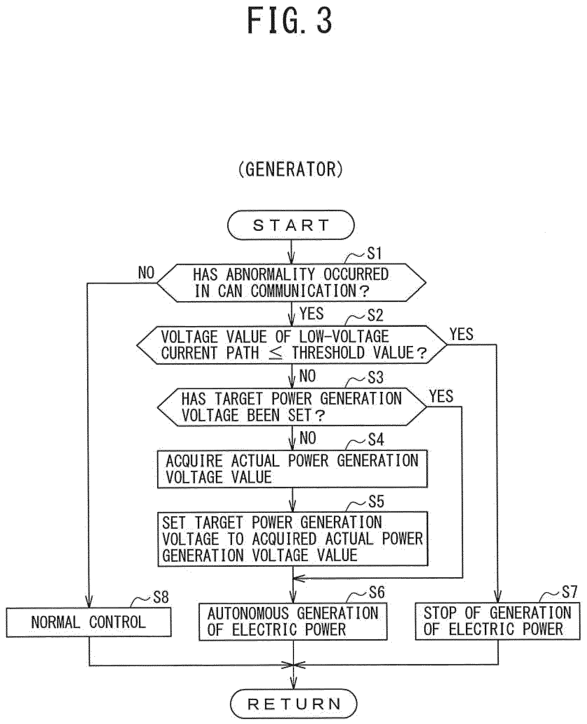

The operation of the generator 13 in the case of communication abnormality will be described with reference to Fig. 3. In Fig. 3, the generator 13 determines whether or not the communication (written as CAN communication in the figure) by CAN is abnormal in step S1. When it is not the abnormal state, the normal control is performed and the current operation ends in step S8. The normal control is a control in which the control device 19 and the generator 13 communicate with each other and the generator 13 generates high-voltage electric power according to the instruction of the control device 19.

When the communication is abnormal in step S1, the generator 13 determines whether or not the voltage value of the low-voltage current path is equal to or lower than a threshold value in step S2. When it is determined that the voltage value is not equal to or lower than the threshold value in step S2, the generator 13 determines whether or not the target power generation voltage has been set in step S3.

When the target power generation voltage has not been set in step S3, the generator 13 acquires the actual power generation voltage value in step S4. Next, the generator 13 sets the target power generation voltage to the actual power generation voltage value in step S5. Next, the generator 13 starts the autonomous generation of electric power in step S6.

When it is determined that the voltage value is equal to or lower than the threshold value in step S2, the generator 13 stops the generation of electric power in step S7. Additionally, the generator 13 stops the autonomous generation of electric power when it is determined that the voltage value is equal to or lower than the threshold value also during the autonomous generation of electric power in the case of communication abnormality with the control device 19.

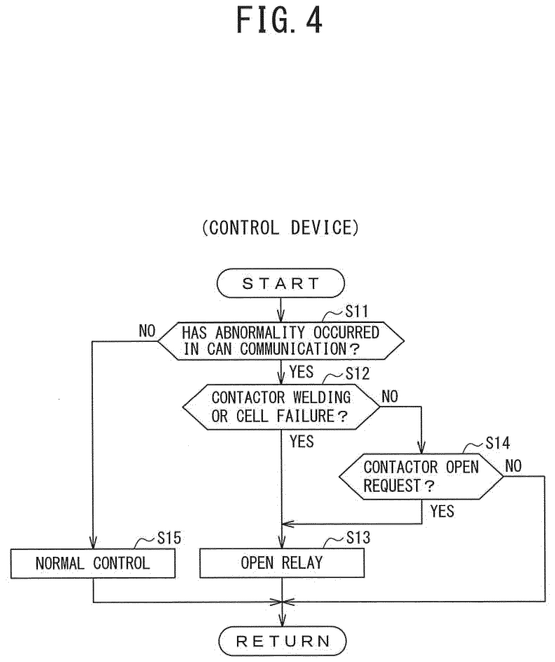

The operation of the control device 19 in the case of communication abnormality will be described with reference to Fig. 4. In Fig. 4, the control device 19 determines whether or not the communication (written as CAN communication in the figure) by CAN is abnormal in step S11. When it is not the abnormal state, the normal control is performed in step S15 and the current operation ends. The normal control is a control in which the control device 19 and the generator 13 communicate with each other and the generator 13 generates high-voltage electric power according to the instruction of the control device 19.

When the communication with the generator 13 is abnormal in step S11, the control device 19 determines whether or not the welding of the contactor 14A or the failure of the cell of the high-voltage battery 14 occurs in step S12.

When it is determined that the welding of the contactor 14A or the failure of the cell of the high-voltage battery 14 occurs in step S12, the control device 19 opens the relay 16 and ends the current operation in step S13.

When it is determined that the welding of the contactor 14A or the failure of the cell of the high-voltage battery 14 does not occur in step S12, the control device 19 determines whether or not there is an open request of the contactor 14A from the BMS 14B of the high-voltage battery 14 in step S14.

When there is no open request of the contactor 14A in step S14, the control device 19 ends the current operation. When there is an open request of the contactor 14Ain step S14, the control device 19 opens the relay 16 before opening the contactor 14A in step S13 and ends the current operation. That is, in step S13, the control device 19 first opens the relay 16 and then opens the contactor 14A.

As described above, in this embodiment, the hybrid vehicle 1 includes the low-voltage current path 21 which is connected to the generator 13 and supplies the low-voltage electric power having a voltage lower than the high-voltage electric power to the generator 13 and the relay 16 which is switched by the control device 19 to the closed state of connecting the low-voltage current path 21 or the open state of disconnecting the low-voltage current path 21. The generator 13 stops the autonomous generation of electric power when the relay 16 is switched to the open state during the autonomous generation of electric power so that the low-voltage current path 21 is disconnected.

When the contactor 14A is switched from the closed state to the open state, the control device 19 switches the relay 16 from the closed state to the open state before the contactor 14A is switched from the closed state to the open state.

Accordingly, the generator 13 can generate electric power enabling the continuous travel of the hybrid vehicle 1 by the autonomous generation of electric power even when the communication abnormality with the control device 19 occurs. Therefore, it is possible to increase the chance that the driver drives the hybrid vehicle 1 and brings the vehicle to the service factory even when the communication abnormality occurs.

Further, since the relay 16 is switched from the closed state to the open state before the contactor 14A is switched from the closed state to the open state, the contactor 14A can be opened while the autonomous generation of electric power of the generator 13 is stopped and the high-voltage electric power is not supplied to the high-voltage current path 20. Accordingly, it is possible to prevent an occurrence of the welding of the disconnected contactor 14A provided in the high-voltage current path 20 or the voltage surge (load dump) of the high-voltage current path 20.

As a result, the generator 13 can generate electric power enabling the continuous travel even when the communication abnormality with the control device 19 occurs and an occurrence of the welding of the disconnected contactor 14A provided in the high-voltage current path 20 or the voltage surge of the high-voltage current path 20 can be prevented.

Further, in this embodiment, the hybrid vehicle 1 includes the DC-DC converter 15 which steps down the high-voltage electric power generated by the generator 13 and supplies the stepped down low-voltage electric power to the low-voltage system, the low-voltage current path 21 supplies the low-voltage electric power from the low-voltage system to the generator 13, and the generator 13 includes the high voltage detection unit 13A which detects the actual power generation voltage value of the high-voltage electric power to be generated and performs the autonomous generation of electric power by setting the actual power generation voltage value detected by the high voltage detection unit 13A before the occurrence of the communication abnormality during the communication abnormality to the target power generation voltage value.

Accordingly, since the actual power generation voltage value before the occurrence of the communication abnormality is set to the target power generation voltage during the communication abnormality, the target power generation voltage can be set to an appropriate voltage value and the overcharge or overdischarge of the low-voltage system can be prevented.

Further, since the supply of electric power to the contactor 14A can be suppressed as much as possible when the contactor 14A is welded, it is possible to reduce the possibility of damaging the contactor 14A and to reduce the possibility of red heat or the like of the contactor 14A.

Further, in this embodiment, the generator 13 includes the low voltage detection unit 13B which detects the voltage of the low-voltage electric power supplied from the low-voltage current path 21 and the generator 13 stops the autonomous generation of electric power when the voltage value detected by the low voltage detection unit 13B during the communication abnormality is equal to or lower than the threshold value.

Accordingly, since the generator 13 stops the autonomous generation of electric power when the DC-DC converter 15 stops the supply of the low-voltage electric power to the low-voltage system, the engine load decreases and the consumption of fuel and electric power is suppressed. Accordingly, the travel distance can be increased and the driver can drive to dealers or repair shops. Further, since the supply of electric power to the DC-DC converter 15 is stopped during the failure of the DC-DC converter 15, it is possible to reduce the possibility of red heat or the like of the DC-DC converter 15.

Further, in this embodiment, the hybrid vehicle 1 includes the high-voltage battery 14 having a plurality of cells and the high-voltage current path 20 connects the generator 13 to the high-voltage battery 14. Then, the control device 19 switches the relay 16 from the closed state to the open state when the communication is abnormal and the cell fails.

Accordingly, since the generator 13 stops the autonomous generation of electric power by switching the relay 16 to the closed state when the communication is abnormal and the cell of the high-voltage battery 14 fails, it is possible to protect the high-voltage battery 14.

In this embodiment, the generator 13 performs the autonomous generation of electric power by setting the actual power generation voltage value detected by the high voltage detection unit 13A before the occurrence of the communication abnormality to the target power generation voltage value during the communication abnormality.

Additionally, when electric power is generated above the center (for example, 60%) of the regular use area of the high-voltage battery 14, the generator 13 may set the target power generation voltage to the constant stored in the generator 13 during the communication abnormality.

The autonomous generation of electric power basically maintains the state at the time of the occurrence of the communication abnormality. However, when the communication abnormality occurs during high regeneration of the generator 13, the excessive power generation will increase the mechanical load and waste fuel consumption. Since the target power generation voltage is set to a constant stored in the generator 13, it is possible to extend the traveling life of the vehicle.

### (DESCRIPTION OF REFERENCE NUMERALS)

1 ... Hybrid vehicle, 13 ... Generator, 13A ... High voltage detection unit, 13B ... Low voltage detection unit, 14 ... High-voltage battery, 14A ... Contactor, 15 ... DC-DC converter, 16 ... Relay, 19 ... Control device, 20 ... High-voltage current path, 21 ... Low-voltage current path

## Claims

1. A hybrid vehicle power generation system comprising:
a control device (19);
a generator (13) performing communication with the control device (19), generating high-voltage electric power according to an instruction of the control device (19) in a normal state without communication abnormality, and autonomously generating high-voltage electric power in an abnormal communication state with communication abnormality;
a high-voltage current path (20) connected to the generator (13) and receiving the high-voltage electric power generated by the generator (13); and
a contactor (14A) switched by the control device (19) to a closed state of connecting the high-voltage current path (20) or an open state of disconnecting the high-voltage current path (20), the hybrid vehicle power generation system being **characterized by**
a low-voltage current path (21) connected to the generator (13) and supplying low-voltage electric power, having a voltage lower than the high-voltage electric power supplied to the high-voltage current path (20), to the generator (13); and
a relay (16) switched by the control device (19) to a closed state of connecting the low-voltage current path (21) or an open state of disconnecting the low-voltage current path (21),
wherein the generator (13) stops the autonomous generation of electric power when the relay (16) is switched to the open state to disconnect the low-voltage current path (21) during the autonomous generation of electric power, and
wherein the control device (19) switches the relay (16) from the closed state to the open state before the contactor (14A) is switched from the closed state to the open state when switching the contactor (14A) from the closed state to the open state.

2. The hybrid vehicle power generation system according to claim 1, further comprising:
a DC-DC converter (15) stepping down the high-voltage electric power generated by the generator (13) and supplying the stepped down low-voltage electric power to a low-voltage system,
wherein the low-voltage current path (21) supplies the low-voltage electric power from the low-voltage system to the generator (13), and
wherein the generator (13) includes a high voltage detection unit (13A) detecting an actual power generation voltage value of the high-voltage electric power to be generated and performs the autonomous generation of electric power by setting the actual power generation voltage value detected by the high voltage detection unit (13A) before the occurrence of the communication abnormality to a target power generation voltage value during the communication abnormality.

3. The hybrid vehicle power generation system according to claim 2,
wherein the generator (13) includes a low voltage detection unit (13B) detecting the voltage of the low-voltage electric power supplied from the low-voltage current path (21), and
wherein the generator (13) stops the autonomous generation of electric power when the voltage value detected by the low voltage detection unit (13B) during the communication abnormality is equal to or lower than a threshold value.

4. The hybrid vehicle power generation system according to any one of claims 1 to 3, further comprising:
a high-voltage battery (14) including a plurality of cells,
wherein the high-voltage current path (20) connects the generator (13) to the high-voltage battery (14), and
wherein the control device (19) switches the relay (16) from the closed state to the open state when the communication is abnormal and the cell fails.

## Patentansprüche

1. Ein Hybridfahrzeug-Energieerzeugungssystem, umfassend:
eine Steuervorrichtung (19);
einen Generator (13), der eine Kommunikation mit der Steuervorrichtung (19) ausführt, elektrische Hochspannungsenergie gemäß einer Anweisung der Steuervorrichtung (19) in einem Normalzustand ohne Kommunikationsanomalie erzeugt, und autonom elektrische Hochspannungsenergie in einem abnormalen Kommunikationszustand mit Kommunikationsanomalie erzeugt;
einen Hochspannungsstrompfad (20), der mit dem Generator (13) verbunden ist und die von dem Generator (13) erzeugte elektrische Hochspannungsleistung empfängt; und
ein Schütz (14A), das durch die Steuervorrichtung (19) in einen geschlossenen Zustand zum Verbinden des Hochspannungsstrompfades (20) oder in einen geöffneten Zustand zum Trennens des Hochspannungsstrompfades (20) geschaltet ist, wobei das Hybridfahrzeug-Energieerzeugungssystem **gekennzeichnet ist durch**
einen Niederspannungsstrompfad (21), der mit dem Generator (13) verbunden ist und dem Generator (13) elektrische Niederspannungsleistung zuführt, mit einer Spannung, die geringer ist als die elektrische Hochspannungsleistung, die dem Hochspannungsstrompfad (20) zugeführt wird; und
ein Relais (16), das von der Steuervorrichtung (19) in einen geschlossenen Zustand zum Verbinden des Niederspannungsstrompfades (21) oder in einen geöffneten Zustand zum Trennens des Niederspannungsstrompfades (21) geschaltet wird,
wobei der Generator (13) die autonome Erzeugung von elektrischer Energie stoppt, wenn das Relais (16) in den geöffneten Zustand geschaltet wird, um den Niederspannungsstrompfad (21) während der autonomen Erzeugung von elektrischer Energie zu trennen, und wobei die Steuereinrichtung (19) das Relais (16) vom geschlossenen Zustand in den geöffneten Zustand schaltet, bevor das Schütz (14A) vom geschlossenen Zustand in den geöffneten Zustand geschaltet wird, wenn das Schütz (14A) vom geschlossenen Zustand in den geöffneten Zustand geschaltet wird.

2. Das Hybridfahrzeug-Energieerzeugungssystem nach Anspruch 1, ferner umfassend:
einen Gleichspannungswandler (15), der die von dem Generator (13) erzeugte elektrische Hochspannungsleistung absenkt und die abgesenkte elektrische Niederspannungsleistung an ein Niederspannungsnetz liefert,
wobei der Niederspannungsstrompfad (21) die elektrische Niederspannungsleistung von dem Niederspannungssystem an den Generator (13) liefert, und
wobei der Generator (13) eine Hochspannungserfassungseinheit (13A) umfasst, die einen tatsächlichen Stromerzeugungsspannungswert der zu erzeugenden elektrischen Hochspannungsenergie erfasst und die autonome Erzeugung von Elektroenergie durchführt, indem der von der Hochspannungserfassungseinheit (13A) erfasste tatsächliche Stromerzeugungsspannungswert vor dem Auftreten der Kommunikationsanomalie auf einen Zielstromerzeugungsspannungswert während der Kommunikationsanomalie eingestellt wird.

3. Das Hybridfahrzeug-Energieerzeugungssystem nach Anspruch 2, ferner umfassend:
wobei der Generator (13) eine Niederspannungserfassungseinheit (13B) umfasst, die die Spannung der von dem Niederspannungsstrompfad (21) zugeführten elektrischen Niederspannungsleistung erfasst, und
wobei der Generator (13) die autonome Erzeugung von elektrischer Leistung beendet, wenn der von der Niederspannungserfassungseinheit (13B) während der Kommunikationsanomalie erfasste Spannungswert gleich oder kleiner als ein Schwellenwert ist.

4. Das Hybridfahrzeug-Energieerzeugungssystem nach einem der Ansprüche 1 bis 3, ferner umfassend:
eine Hochspannungsbatterie (14) mit einer Vielzahl von Zellen,
wobei der Hochspannungsstrompfad (20) den Generator (13) mit der Hochspannungsbatterie (14) verbindet, und
wobei die Steuereinrichtung (19) das Relais (16) von dem geschlossenen Zustand in den offenen Zustand schaltet, wenn die Kommunikation abnormal ist und die Zelle ausfällt.

## Revendications

1. Système de génération de puissance de véhicule hybride comprenant :
un dispositif de commande (19) ;
un générateur (13) effectuant une communication avec le dispositif de commande (19), générant de la puissance électrique haute tension selon une instruction du dispositif de commande (19) dans un état normal sans anomalie de communication, et générant de manière autonome de la puissance électrique haute tension dans un état de communication anormal avec anomalie de communication ;
un trajet de courant haute tension (20) connecté au générateur (13) et recevant la puissance électrique haute tension générée par le générateur (13) ; et
un contacteur (14A) commuté par le dispositif de commande (19) vers un état fermé de connexion du trajet de courant haute tension (20) ou vers un état ouvert de déconnexion du trajet de courant haute tension (20), le système de génération de puissance de véhicule hybride étant **caractérisé par**
un trajet de courant basse tension (21) connecté au générateur (13) et alimentant une puissance électrique basse tension, ayant une tension inférieure à la puissance électrique haute tension fournie au trajet de courant haute tension (20), au générateur (13) ; et
un relais (16) commuté par le dispositif de commande (19) vers un état fermé de connexion du trajet de courant basse tension (21) ou vers un état ouvert de déconnexion du trajet de courant basse tension (21),
dans lequel le générateur (13) arrête la génération autonome de puissance électrique lorsque le relais (16) est commuté vers l'état ouvert pour déconnecter le trajet de courant basse tension (21) pendant la génération autonome de puissance électrique, et
dans lequel le dispositif de commande (19) commute le relais (16) de l'état fermé à l'état ouvert avant que le contacteur (14A) ne soit commuté de l'état fermé à l'état ouvert lors de la commutation du contacteur (14A) de l'état fermé à l'état ouvert.

2. Système de génération de puissance de véhicule hybride selon la revendication 1, comprenant également :
un convertisseur CC-CC (15) abaissant la puissance électrique haute tension générée par le générateur (13) et alimentant la puissance électrique basse tension abaissée à un système basse tension,
dans lequel le trajet de courant basse tension (21) alimente la puissance électrique basse tension du système basse tension au générateur (13), et
dans lequel le générateur (13) comprend une unité de détection de haute tension (13A) détectant une valeur de tension de génération de puissance réelle de la puissance électrique haute tension à générer et effectue la génération autonome de puissance électrique en réglant la valeur de tension de génération de puissance réelle détectée par l'unité de détection de haute tension (13A) avant l'apparition de l'anomalie de communication sur une valeur de tension de génération de puissance cible pendant l'anomalie de communication.

3. Système de génération de puissance de véhicule hybride selon la revendication 2,
dans lequel le générateur (13) comporte une unité de détection de basse tension (13B) détectant la tension de la puissance électrique basse tension alimentée par le trajet de courant basse tension (21), et
dans lequel le générateur (13) arrête la génération autonome de puissance électrique lorsque la valeur de tension détectée par l'unité de détection de basse tension (13B) pendant l'anomalie de communication est égale ou inférieure à une valeur seuil.

4. Système de génération de puissance de véhicule hybride selon l'une quelconque des revendications 1 à 3, comprenant également :
une batterie haute tension (14) comportant une pluralité de cellules,
dans lequel le trajet de courant haute tension (20) connecte le générateur (13) à la batterie haute tension (14), et
dans lequel le dispositif de commande (19) commute le relais (16) de l'état fermé à l'état ouvert lorsque la communication est anormale et que la cellule tombe en panne.
